# EUROPÄISCHE PATENTSCHRIFT

(11) **EP 1 847 819 B1**
(45) Veröffentlichungstag und Bekanntmachung des Hinweises auf die Patenterteilung: **30.12.2009**
(21) Anmeldenummer: 07005103.2
(22) Anmeldetag: 13.03.2007
(51) Int. Cl.: G01J 5/04, G01G 19/04, G01M 17/10, B61K 9/12, B61K 9/04

(54) **Meßstrecke an einer Schiene**
Measuring section on a rail
Section de mesure sur un rail

(30) Priorität: 05.04.2006 DE 102006015924
(43) Veröffentlichungstag der Anmeldung: 24.10.2007
(73) Patentinhaber: Schenck Process GmbH, 64293 Darmstadt (DE)
(72) Erfinder: Groll, Peter, 64297 Darmstadt (DE)
(74) Vertreter: Blumbach - Zinngrebe

(56) Entgegenhaltungen:
- EP-A1- 0 281 640
- EP-A1- 0 571 852
- WO-A-00/23770
- WO-A-2004/008067

## Beschreibung

Die Erfindung betrifft ein Modul für eine Meßstrecke an einer Schiene mit mehreren in Schienenlängsrichtung beabstandeten Krafaufnehmern, auf denen die Schiene abgestützt ist und die auf die Schiene einwirkenden Kräfte und/oder Momente und/oder Eigenschaften der über die Schiene rollenden Fahrzeuge erfassen.

Unter Diagnosevorrichtungen werden solche Vorrichtungen verstanden, die vornehmlich Eigenschaften der über die Schiene rollenden Fahrzeuge aufnehmen und in im allgemeinen elektrische Ausgangssignale umformen, die für Art und Größe des Erfassten charakteristisch sind und in einer nachgeschalteten Auswerteeinrichtung verarbeitet werden. Beispiele sind in den nachstehend angegebenen Schriften angegeben.

In dem Dokument DE 103 05 470 A1 ist eine Meßstrecke zur Erfassung unterschiedlicher physikalischer Größen schienengebundener Fahrzeuge beschrieben, die unterschiedliche Aufnehmersysteme aufweist. Diese Aufnehmersysteme, die zur Temperaturmessung und/oder Kraftmessung und/oder Wegmessung dienen, sind an Schienen oder Schwellen innerhalb eines gemeinsamen Gleisabschnittes angeordnet und mit einer gemeinsamen Auswerte- und Stromversorgungseinrichtung verbunden. Zu den Aufnehmersystemen gehören verschiedene Meßvorrichtungen an Gleisabschnitten, die bei Überfahrt eines oder mehrerer Fahrzeuge deren Gewicht, Radunrundheiten, Radabflachungen, Fahrgeschwindigkeiten, Anzahl der Achsen, Raddurchmesser, entgleiste Räder, Lagerüberhitzung, Bremsüberhitzung oder einen Fahrzeugtyp erfassen können.

So beschreibt die Schrift DE 11 33 141 A eine Wiegeeinrichtung für Schienenfahrzeuge, bei der innerhalb einer längs einer Schiene definierten Meßstrecke mit einer Auswerteschaltung verbundene Dehnungsmeßstreifen unmittelbar an der Schiene angebracht sind. Die Dehnungsmeßstreifen können an den Schienenfuß angeklebt oder mit diesem lösbar in der Weise verbunden sein, wie dies das Dokument DE 32 06 611 für einen Schienenschalter zeigt.

In den Wiegeeinrichtungen werden auch oft sogenannte Wägezellen benutzt, die im Wesentlichen Kraftmeßdosen nach Art der DE 39 37 318 enthalten und zwischen Schiene und einer die aus der Kraftmeßdose ausgeleitete Kraft aufnehmenden Platte eingespannt werden müssen. Dazu sieht die DE 198 48 119 vor, dass je eine Kraftmeßdose sich in einer eine übliche Schwelle ersetzenden Wägeschwelle abstützt.

Eine weitere Wiegeeinrichtung ist in der EP-A-0 281 640 offenbart.

In der DE 198 04 566 A1 ist eine Vorrichtung zur Flachstellenortung von schienengebundenen Rädern beschrieben, bei welcher in der Nähe der Schiene mit einer Auswerteeinrichtung verbundene Diagnosevorrichtungen in Form von Induktionsspulen vorgesehen sind und die Schiene an eine Hochfrequenzspannungsquelle gekoppelt ist. Weiterhin ist in dem Dokument DE 42 17 681 C2 eine Radsatzdiagnoseeinrichtung zur Überwachung vorbeifahrender Eisenbahnfahrzeuge beschrieben, bei der in eine spezielle Schwelle etwa mittig zwischen zwei parallelen Gleisen einer Fahrstrecke eine Infrarotempfangseinheit eingebaut ist. Diese nimmt von den Rädern, Radlagern und den Bremseinrichtungen einer Achse ausgehende Strahlung auf und meldet diese als anormal festgestellte Temperaturen.

An die Ausrüstung einer Meßstrecke werden einzelfallabhängig unterschiedliche Anforderungen gestellt. Oft ist das Gewicht der einzelnen Waggons eines vorüberfahrenden Güterzuges zu erfassen, um eine Überlastung der Gleisanlage festzustellen und die Sicherheit der Weiterfahrt zu gewährleisten. Solche Gewichtskontrolle kann verbunden werden mit einer gleichzeitigen Heißlaufüberwachung der Achsen und Bremsen. Eine Zuginspektion kann die Feststellung von Flachstellen und Unrundheiten an den Rädern erfordern. Diese unterschiedlichen Anforderungen bedeuten, dass die jeweils notwendigen Diagnosevorrichtungen an Ort und Stelle zu verbringen und einzubauen sind. Die Einrichtung einer Meßstrecke bedingt daher einen zeitraubenden und kostenintensiven Aufwand vor Ort sowie die Bereitstellung des jeweils notwendigen Geschirrs und zugehöriger Werkzeuge.

Der Erfindung liegt daher die Aufgabe zugrunde, die Einrichtung einer den jeweiligen Anforderungen angepassten Meßstrecke wesentlich zu vereinfachen.

Dazu sieht die Erfindung bei der eingangs genannten Meßstrecke vor, dass ein vorgefertigtes Modul alle für eine aktuelle Meßstrecke benötigten Diagnosevorrichtungen aufweist und ein sich längs der Meßstrecke erstreckendes, in dem Untergrund verankerbares Trägerelement umfasst, auf welchem die Diagnosevorrichtungen und die Kraftaufnehmer befestigt sind. Die Erfindung bringt den Vorteil, dass nicht jede einzelne jeweils benötigte Dosiervorrichtung und nicht jeder Kraftaufnehmer separat an der Meßstrecke eingebaut werden muss. Es müssen keine Schwellen besonders zugerüstet oder der Untergrund, also üblicherweise das Schotterbett, besonders befestigt werden. Vielmehr kann bereits fabrikmäßig jede individuell benötigte Diagnosevorrichtung mitsamt den für sie gegebenenfalls erforderlichen meist elektrischen Versorgungsleistungen und Steuerungen auf einem geeignet abgelängten Trägerelement an der durch den Einsatzort bestimmten Stelle auf dem Trägerelement befestigt werden. Jedes Trägerelement weist bei seiner Anlieferung an der Meßstrecke bereits die erforderliche Anzahl und Art von Diagnosevorrichtungen und Kraftaufnehmer, im passendem wechselseitigen Abstand auf. Diese Maßnahme verkürzt beträchtlich die sonst für jede Diagnosevorrichtung erforderliche Einbauzeit. Ferner wird dadurch auch diejenige Zeitspanne verkleinert, während der das Gleis für Überfahrt gesperrt bleiben muss. Schließlich werden an der Meßstrecke weniger Spezialkräfte benötigt, weil ein erheblicher Teil derjenigen Arbeit, für die sie zuständig sind, bereits während der fabrikatorischen Vormontage erbracht worden ist.

In bevorzugter Ausführungsform der Erfindung ist vorgesehen, dass das Trägerelement eine Basisplatte und an ihrer zur Schiene ungefähr parallelen Längsseite einen aufrecht stehenden Winkel aufweist, an welchem Stirnseiten von Schwellen befestigbar sind. Derartige Kurzschwellen dienen nicht mehr zur Aufnahme des Gewichts oder sonstiger vom über die Schiene rollenden Fahrzeug ausgehender Kräfte, sondern sollen nur für die Einhaltung des vorgeschriebenen Abstandes zweier Schienen eines Gleises sorgen. Die Kurzschwellen müssen daher nur noch in ihrer Länge hinreichend starr sein und können daher durch einfachere Stäbe ersetzt werden.

Weiterhin empfiehlt es sich, dass die Basisplatte Mittelstück eines Trägers mit U-förmigem Querschnitt ist, dessen Schenkel im Untergrund verankert werden können. Damit erhält das Trägerelement eine Festigkeit, die es besonders für den Einsatz von Kraftmeßdosen geeignet macht. Bevorzugt ist der Träger ein Doppel-T-Träger, an dessen sich aus dem Untergrund erhebenden Schenkeln die Stirnseiten der Kurzschwellen befestigt werden können. Es ist bevorzugt, dass die Höhe der Schenkel des Trägers über dessen Mittelstück nur wenig kleiner ist als die Höhe der an der Schiene befestigten Diagnosevorrichtungen. Die erhabenen Schenkel, vor allem, wenn sie in besonderer Ausführungsform der Erfindung sich in solche Höhe erstrecken, die nur wenig kleiner ist als die Höhe der Diagnosevorrichtungen, bieten zwar ein in vielen Fällen ausreichenden Wetterschutz für die Diagnosevorrichtungen; dieser Schutz wird noch verbessert, wenn bevorzugterweise an der Basisplatte wenigstens im Bereich der Diagnosevorrichtungen ein Schutzblech befestigt ist. Es liegt im Rahmen der Erfindung, statt der genannten Stahlbauteile (Doppel-T-Träger und Querverbindungen) entsprechend gestaltete Betonfertigteile zu verwenden. Zweckmäßig hat die Basisplatte quer zur Schiene eine Breite, die wenigstens gleich der größten Breite der Diagnosevorrichtungen ist. Die Diagnosevorrichtungen können vorteilhaft wenigstens einen Wärmefühler aufweisen, welcher an der Basisplatte oder ihrem Schenkel zwischen benachbarten Diagnosevorrichtungen neben der Schiene angeordnet ist, wobei der wärmeempfindliche Teil des Wärmefühlers nach oben gerichtet ist. Im Übrigen sind bevorzugte Ausführungsformen der Erfindung in den Unteransprüchen angegeben.

Ein Ausführungsbeispiel der Erfindung wird nachstehend anhand der beigefügten Zeichnung im Einzelnen beschrieben. Es zeigen:
Figur 1: einen schematischen Vertikalschnitt quer zur Schiene eines Moduls;
Figur 2: einen schematischen Vertikalschnitt quer zur Schiene einer Variante des Moduls nach Figur 1; und
Figur 3: eine Draufsicht auf das Modul nach Figur 2.

Eine Schiene 1 ist in einer von der Eisenbahngesellschaft vorgeschriebenen Neigung auf eine Adapterplatte 2 unverrückbar aufgeklemmt, welche sich über eine Zwischenplatte 3 auf einem Krafteinleitungsteile 4 einer im Ganzen mit 5 bezeichneten Kraftmeßdose abstützt. Ein Kraftausleitungsteil 6 der Kraftmeßdose 5 ist auf einer Basisplatte 14 eines Moduls 10 befestigt. Die Kraftmeßdose 5 besitzt seitlich einen elektrischen Anschluss 7, an welchem in nicht dargestellter Weise elektrische Signale abgenommen werden können, die die von der Schiene in die Kraftmeßdose eingeleitete Kraft repräsentieren.

Zu dem Modul 10 gehört ein Trägerelement 12, welches unmittelbar in dem Schotterbett 20 für die Schiene eingelassen ist, ohne dass es einer besonderen Verfestigung des Schotterbettes 20 bedarf. Das Trägerelement 12 ist im dargestellten Ausführungsbeispiel ein Doppel-T-Träger von einer Länge, die im Wesentlichen der Länge der Meßstrecke gleicht. Die Breite des Trägerelementes 12 ist wenigstens so groß wie die größte Breite einer Diagnosevorrichtung. Das Trägerelement 12 besitzt die erwähnte Basisplatte 14, die das Mittelstück des Doppel-T-Trägers bildet. Die beiden unteren Schenkel 11 und 13 reichen tief in das Schotterbett 20 hinein. Und die beiden oberen Schenkel 15, 17 erheben sich über die Basisplatte 14 bis zu einer Höhe, die derjenigen der Kraftmeßdose 5 etwa entspricht. Das Trägerelement 12 ist in einer solchen Richtung auf dem Schotterbett 20 abgestützt, dass die beiden oberen Schenkel 15, 17 sich im Wesentlichen parallel zur Schiene 1 erstrecken.

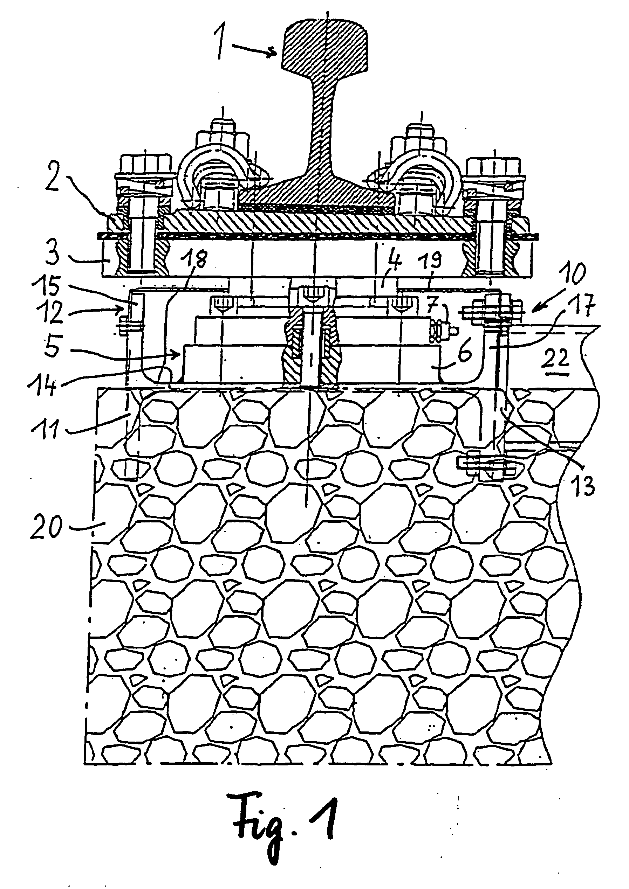

An demjenigen oberen Schenkel 17 und demjenigen unteren Schenkel 13, die sich an der Innenseite der Schiene 1 befinden, sind die Stirnseiten von Kurzschwellen 22 befestigt, die lediglich den konstanten, vorgeschriebenen Abstand der beiden Schienen eines Gleises sichern sollen. Statt der üblicherweise aus Holz bestehenden Kurzschwellen könnten auch (nicht dargestellte) Rohre zu dem gleichen Zweck eingesetzt werden. Aus Figur 1 ist noch zu erkennen, dass sowohl an dem inneren oberen Schenkel 17 wie auch an dem äußeren oberen Schenkel 15 je ein sich im Wesentlichen horizontal erstreckendes Abdeckblech 18, 19 befestigt ist. Die oberen Schenkel 11, 13 und die beiden Abdeckbleche 18, 19 umhüllen die Diagnosevorrichtungen derart seitlich und von oben, dass sie und die Kraftmeßdose 5 mit ihrem elektrischen Anschluss 7 hinreichend vor den Unbilden der Witterung geschützt sind.

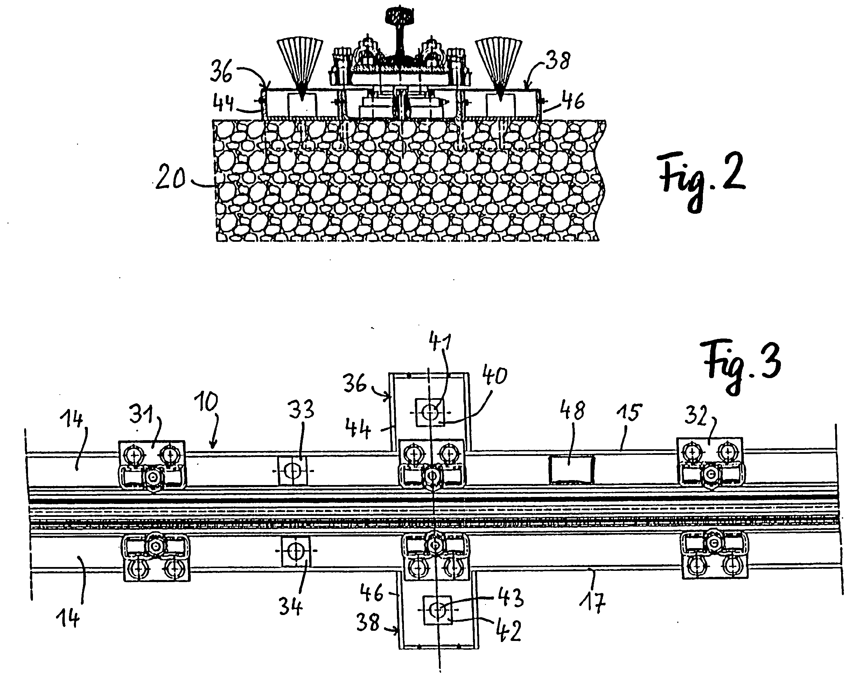

In der Draufsicht auf das Modul 10 gemäß Figur 3 ist je eine nicht sichtbare Kraftmeßdose unter den in Schienenlängsrichtung beabstandeten Adapterplatten 31, 32 angeordnet. In dem Zwischenbereich zwischen den Adapterplatten 31, 32 ist beiderseits der Schiene 1 je eine Diagnosevorrichtung in Form eines Fahrzeugidentifizierungsaufnehmers 33, 34 angeordnet, welcher den Typ, die Belastbarkeit, Achsenzahl und dergleichen Angaben an dem darüber rollenden Fahrzeug erkennt. In je einer Auskragung 36, 38 aus den oberen Schenkeln 15, 17 des Trägerelementes 12 ist je ein Thermofühler 40, 42 untergebracht, dessen nach oben gerichtete wärmeempfindliche Fühlerfläche (Figur 2) 41, 43 die Temperatur der Achsen und Bremsen eines über die Schiene 1 rollenden Fahrzeugs erfasst. Die beiden Auskragungen 36, 38 liegen im dargestellten Beispiel bezüglich der Schiene 1 gegenüber. Die Thermofühler 40, 42 sind in je einem Käfig 44, 46 untergebracht, der nur die wärmeempfindliche Sensorfläche nach oben frei lässt und an die oberen Schenkel 15, 17 angeschraubt ist. Wie Figur 2 zeigt, reichen die Käfige 44, 46 seitlich nicht weiter als das vorhandene Schotterbett 20 ohne sich auf diesem abzustützen.

Ferner ist in Figur 3 ein Steuergerät 48 zu erkennen, das auf der Basisplatte 14 in einem Zwischenraum zwischen den Diagnosevorrichtungen befestigt ist. Nicht dargestellt sind Signalleitungen, die von den Diagnosevorrichtungen und vom Anschluss der Kraftmeßdose 5 ausgehen und mit Eingängen des Steuergerätes 48 verbunden sind. Das Steuergerät 48 bereitet die empfangenen Daten auf und sendet sie über einen im Steuergerät 48 enthaltenen Sender einer entfernten Empfangsstation zu. Letztere verarbeitet die empfangenen Daten zur Bildung von Anzeigen, die das Ergebnis der verschiedenen Diagnosen sichtbar machen.

Das vorstehend beschriebe Modul 10 ist bei dem Hersteller oder Lieferanten, jedenfalls andernorts als an der Meßstrecke vorgefertigt, indem das Trägerelement 12 auf die Länge der Meßstrecke abgelängt und mit den beiden Kraftmeßdosen 5, den Thermofühlern 40, 42, den Fahrzeugidentifizierungsaufnehmern 33, 34 sowie dem Steuergerät 48 ausgerüstet worden ist. Die Meßstrecke kann kürzer sein als ein Schwellenabstand, ist häufig jedoch wesentlich länger als dieser. Die aktuelle Zusammenstellung der im Modul unterzubringenden Diagnosevorrichtungen richtet sich nach den Anforderungen, welche Messwerte längs der Meßstrecke jeweils aufzunehmen sind. Auch das Steuergerät 48 ist nicht notwendiger Bestandteil des Moduls 10, es kann auch unschwer an einer der nahe liegenden Schwellen befestigt werden.

An der Meßstrecke selbst muss dann nur noch das vorbereitete Modul 10 unter der Schiene 1 angeordnet und im Schotterbett 20 verankert werden. Bis auf die Kraftmeßdosen, deren Krafteinleitungsplatte mit der Schiene 1 beziehungsweise der Zwischenplatte 3 kraftschlüssig verbunden werden muss, sind weitere Maßnahmen an der Meßstrecke nicht erforderlich.

## Patentansprüche

1. Modul für eine Messstrecke an einer Schiene, mit mehreren in Schienenlängsrichtung beabstandeten Kraftaufnehmern, auf denen die Schiene abgestützt ist und die auf die Schiene einwirkende Kräfte und/oder Eigenschaften der über die Schiene rollenden Fahrzeuge erfassen, **gekennzeichnet durch** ein vorgefertigtes Modul (10), welches ein auf die Länge der aktuellen Messstrecke abgelängtes Trägerelement (12) und die für die Meßstrecke benötigte Art und Anzahl von Diagnosevorrichtungen (33, 34; 40, 42) und Kraftaufnehmern (5) aufweist, wobei die Diagnosevorrichtungen (33, 34; 40, 42) und die Kraftaufnehmer (5) auf dem Trägerelement (12) befestigt sind, und wobei das Trägerelement (12) sich längs der Messstrecke erstreckt und in dem Untergrund verankerbar ist.

2. Vorgefertigtes Modul nach Anspruch 1, **dadurch gekennzeichnet, dass** das Trägerelement eine Basisplatte und an ihrer zur Schiene ungefähr parallelen Längsseite einen aufrecht stehenden Winkel aufweist, an welchem die Stirnseiten von Schwellen befestigbar sind.

3. Vorgefertigtes Modul nach Anspruch 2, **dadurch gekennzeichnet, dass** die Basisplatte Mittelstück eines Trägers mit U-förmigem Querschnitt ist, dessen Schenkel im Untergrund verankert sind, wobei die Schwellen an einem der Schenkel befestigt sind.

4. Vorgefertigtes Modul nach Anspruch 3, **dadurch gekennzeichnet, dass** der Träger ein Doppel-T-Träger ist.

5. Vorgefertigtes Modul nach Anspruch 4, **dadurch gekennzeichnet, dass** die Höhe der Schenkel des Trägers über dessen Mittelstück nur wenig kleiner ist als die Höhe der an der Schiene befestigten Diagnosevorrichtungen.

6. Vorgefertigtes Modul nach einem der vorstehenden Ansprüche 2 bis 5, **dadurch gekennzeichnet, dass** die Basisplatte quer zur Schiene eine Breite hat, die wenigstens gleich der größten Breite der Diagnosevorrichtungen ist.

7. Vorgefertigtes Modul nach einem der Ansprüche 2 bis 6, **dadurch gekennzeichnet, dass** der Träger ein Stahlbauteil oder ein Betonfertigteil ist.

8. Vorgefertigtes Modul nach Anspruch 6 oder 7, **dadurch gekennzeichnet, dass** die Diagnosevorrichtungen wenigstens einen Wärmefühler aufweisen, welcher an der Basisplatte oder ihrem Schenkel zwischen benachbarten Diagnosevorrichtungen neben der Schiene angeordnet ist, wobei der wärmeempfindliche Teil des Wärmefühlers nach oben gerichtet ist.

9. Vorgefertigtes Modul nach einem der Ansprüche 2 bis 8, **dadurch gekennzeichnet, dass** an der Basisplatte wenigstens im Bereich jeder Diagnosevorrichtung ein Schutzblech befestigt ist.

10. Vorgefertigtes Modul nach einem der vorstehenden Ansprüche, **dadurch gekennzeichnet, dass** zu den Diagnosevorrichtungen wenigstens eine Wägevorrichtung gehört, auf welcher die Schiene verankerbar ist.

## Claims

1. Module for a measuring section on a rail, having a plurality of force transducers spaced apart in the longitudinal direction of the rail, on which force transducers the rail is supported and which detect forces acting upon the rail and/or properties of the vehicles passing over the rail, **characterised by** a prefabricated module (10) which has a support element (12), which is cut to the length of the current measuring section, and the type and number of diagnostic devices (33, 34; 40, 42) and force transducers (5) required for the measuring section, wherein the diagnostic devices (33, 34; 40, 42) and the force transducers (5) are attached to the support element (12), and wherein the support element (12) extends along the measuring section and can be anchored in the ground.

2. Prefabricated module as claimed in claim 1, **characterised in that** the support element has a base plate and, on its long side which is approximately in parallel with the rail, a vertically standing bracket, to which the end faces of sleepers can be attached.

3. Prefabricated module as claimed in claim 2, **characterised in that** the base plate is the middle piece of a support with a U-shaped cross-section, the limbs of which are anchored in the ground, wherein the sleepers are attached to one of the limbs.

4. Prefabricated module as claimed in claim 3, **characterised in that** the support is a doubleT-shaped support.

5. Prefabricated module as claimed in claim 4, **characterised in that** the height of the limbs of the support above the middle piece thereof is only slightly less than the height of the diagnostic devices attached to the rail.

6. Prefabricated module as claimed in any one of the preceding claims 2 to 5, **characterised in that,** transverse to the rail, the base plate has a width which is at least equal to the greatest width of the diagnostic devices.

7. Prefabricated module as claimed in any one of claims 2 to 6, **characterised in that** the support is a steel component or a precast concrete part.

8. Prefabricated module as claimed in claim 6 or 7, **characterised in that** the diagnostic devices have at least one heat sensor which is disposed on the base plate or its limb between adjacent diagnostic devices next to the rail, wherein the heat-sensitive part of the heat sensor is directed upwards.

9. Prefabricated module as claimed in any one of claims 2 to 8, **characterised in that** a protective metal plate is attached to the base plate at least in the region of each diagnostic device.

10. Prefabricated module as claimed in any one of the preceding claims, **characterised in that** the diagnostic devices include at least one weighing device to which the rail can be anchored.

## Revendications

1. Module pour un tronçon de mesure sur un rail, comprenant plusieurs capteurs de force espacés dans le sens longitudinal du rail, sur lesquels le rail est soutenu et qui enregistrent les forces et/ou les propriétés, agissant sur les rails, des véhicules roulant sur le rail, **caractérisé par** un module (10) préfabriqué, lequel présente un élément porteur (12) mis à la longueur de l'actuel tronçon de mesure et la nature et le nombre, nécessaires pour le tronçon de mesure, de dispositifs de diagnostic (33, 34 ; 40, 42) et de capteurs de force (5), les dispositifs de diagnostic (33, 34 ; 40, 42) et les capteurs de force (5) étant fixés sur l'élément support (12), et l'élément support (12) s'étendant le long du tronçon de mesure et pouvant être ancré dans le sous-sol.

2. Module préfabriqué selon la revendication 1, **caractérisé en ce que** l'élément support présente une plaque de base et sur son côté longitudinal à peu près parallèle au rail une cornière verticale sur laquelle les faces frontales des traverses peuvent être fixées.

3. Module préfabriqué selon la revendication 2, **caractérisé en ce que** la plaque de base est une pièce centrale d'une poutre avec une section en U, dont les branches sont ancrées dans le sous-sol, les traverses étant fixées sur l'une des branches.

4. Module préfabriqué selon la revendication 3, **caractérisé en ce que** la poutre est une poutre en double T.

5. Module préfabriqué selon la revendication 4, **caractérisé en ce que** la hauteur des branches de la poutre au-dessus de sa partie centrale n'est que légèrement inférieure à la hauteur des dispositifs de diagnostic fixés sur le rail.

6. Module préfabriqué selon l'une quelconque des revendications 2 à 5, **caractérisé en ce que** la plaque de base a transversalement au rail une largeur qui est au moins égale à la plus grande largeur des dispositifs de diagnostic.

7. Module préfabriqué selon l'une quelconque des revendications 2 à 6, **caractérisé en ce que** la poutre est un élément de construction en acier ou un élément préfabriqué en béton.

8. Module préfabriqué selon la revendication 6 ou 7, **caractérisé en ce que** les dispositifs de diagnostic présentent au moins un détecteur thermique, qui est disposé sur la plaque de base ou sa branche entre des dispositifs de diagnostic voisins à côté du rail, la partie sensible à la chaleur du détecteur thermique étant dirigée vers le haut.

9. Module préfabriqué selon l'une quelconque des revendications 2 à 8, **caractérisé en ce qu'**une tôle de protection est fixée sur la plaque de base au moins dans la zone de chaque dispositif de diagnostic.

10. Module préfabriqué selon l'une quelconque des revendications précédentes, **caractérisé en ce qu'**au moins un dispositif de pesée, sur lequel le rail peut être ancré, appartient aux dispositifs de diagnostic.
